# EUROPEAN PATENT SPECIFICATION

(11) **EP 3 175 531 B1**
(45) Date of publication and mention of the grant of the patent: **03.04.2019**
(21) Application number: 15826407.7
(22) Date of filing: 30.07.2015
(51) Int. Cl.: H02J 7/02, H01F 38/14, H02J 50/10, H02J 50/80

(54) **ADAPTIVE AND MULTI-TRANSMITTER WIRELESS POWER FOR ROBOTS**
ADAPTIVE UND MIT MEHRSENDER-DRAHTLOSLEISTUNG FÜR ROBOTER
ALIMENTATION SANS FIL ADAPTATIVE ET À ÉMETTEURS MULTIPLES POUR ROBOTS

(30) Priority: 30.07.2014 US 201462031131 P
(43) Date of publication of application: 07.06.2017
(73) Proprietor: University of Washington, Seattle, WA 98105-4608 (US)
(72) Inventor: SMITH, Joshua R., Seattle, WA 98105-4608 (US); WATERS, Benjamin, Seattle, WA 98105-4608 (US)
(74) Representative: Colombo, Stefano Paolo
(86) International application number: PCT/US2015/042941
(87) International publication number: WO 2016/019159

(56) References cited:
- WO-A1-2013/177205
- US-A1- 2010 052 811
- US-A1- 2012 153 738
- US-A1- 2013 278 209
- US-A1- 2014 084 688
- US-A1- 2014 203 774

## Description

### BACKGROUND

Wireless power transfer using inductive coupling is becoming increasingly popular for consumer electronic devices. Commercial applications include wireless charging pads, electronic toothbrushes, induction cookers, and electric car battery chargers. However, none of these applications enable the range or geometric freedom that the term wireless power suggests. Charging pads and electric toothbrushes require that the device be placed very close to (or directly on top of) the charging pad. This is because the efficiency for traditional inductively coupled wireless power transfer systems drops off rapidly as the distance between the transmitter and receiver increases.

Far-field wireless power transfer techniques use propagating electromagnetic waves and are capable of delivering power to a much larger volume of space. However, there is an inherent tradeoff between directionality and transfer efficiency. For example, radio frequency (RF) broadcast methods-which transmit power in an omni-directional pattern-allow for power transfer anywhere in the coverage area. Although mobility is maintained, end-to-end efficiency is lost because the power density decreases with the square of the distance. Microwave systems with high gain antennas have been used to transfer power over several kilometers at efficiencies of over 90%. However, these systems suffer from the need for sophisticated tracking and alignment equipment to maintain a line of sight (point-to-point) connection.

Regulatory restrictions limit the amount of power that can be transmitted in uncontrolled environments for safety, as well as emissions and interference reasons. As a result, the main commercial use of far-field wireless power transfer is for passive (i.e., battery free) ultrahigh frequency RF identification (UHF RFID) tags, which are limited to four watts equivalent isotropic radiated power in the United States.

Recent research efforts using coupled resonators (MCRs) for wireless power transfer have demonstrated the potential to deliver power with more efficiency than far-field broadcast approaches, and at longer ranges than traditional inductively coupled methods. These techniques use high quality factor ("high-Q") coupled resonators that transfer energy via magnetic fields that do not strongly interact with the human body. U.S. Patent Publication No. 2012/0153738, to Karalis et al., and U.S. Patent Publication No. 2012/0080957, to Cooper et al., disclose certain aspects of wireless energy transfer using MCRs.

However, a drawback of current MCR systems is the inability to efficiently adapt to changes in the environment. For example, unpredictable loads and changes in distance and orientation between MCR coils rapidly change system operating points, which disrupt the end-to-end wireless power transfer efficiency. Dynamic adaptation of a system to these types of events is a critical capability in developing fully functional and versatile wireless power solutions.

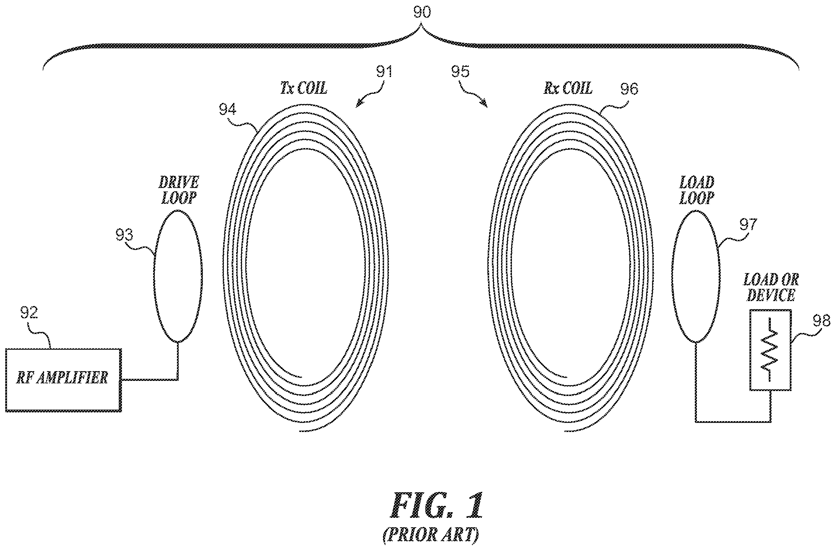

FIGURE 1 shows a diagram of a wireless power system 90 using high-Q MCRs. A transmitter module 91 includes a single turn drive loop 93 and a multi-turn, spiral resonator or transmit coil (Tx coil) 94. When an RF amplifier 92 drives current through the drive loop 93 at the transmitter module's 91 resonant frequency, the resulting oscillating magnetic field excites the Tx coil 94. The Tx coil 94 stores energy in the same manner as a discrete LCR tank. This results in a large oscillating magnetic field in the vicinity of the Tx coil 94. A high-Q coil implies that more energy can be stored on the coil, which also results in greater magnetic flux density at a given point in space.

The receiver module 95 is designed similarly. It includes a multi-turn, spiral resonator or receive coil (Rx coil) 96 and a single turn load loop 97, which is connected to an end device 98. The drive loop 93 and Tx coil 94 are magnetically coupled, and the load loop 97 and Rx coil 96 are magnetically coupled. Similarly, the Tx coil 94 and the Rx coil 96 share a mutual inductance, which is a function of the geometry of the coils 94, 96 and the distance between them. The high-Q Tx and Rx coils 94, 96 form a single system of coupled resonators, which can efficiently transfer energy therebetween.

In general (other parameters being held constant), the coupling coefficient between the Tx coil 94 and the Rx coil 96 is inversely proportional to the distance between the coils 94, 96. At relatively short distances (in the over-coupled regime), high efficiency power transfer between the coils 94, 96 can be achieved. However, in the over-coupled regime there are multiple resonant modes that occur at different frequencies. In order to achieve high efficiency in the over-coupled regime, a wide range of operating frequencies may be used to track the optimal frequency corresponding to one of these resonant modes. As the separation distance increases, the coupling between the resonators 94, 96 decreases, and the frequency range for high efficiency power transfer narrows, until the optimal frequency converges to the fundamental frequency of the system (critical coupling). However, as discussed below, proper tuning techniques will enable near constant power transfer efficiency substantially within the entire over-coupled regime.

In the under-coupled regime, the shared flux falls below a critical point. Below this point, the Tx coil 94 needs to emit more power to maintain the magnetic field than can be absorbed by the Rx coil 96. The result is that maximum efficiency cannot be achieved. Critical coupling is the point of transition between these two regimes and corresponds to the greatest range at which maximum efficiency can still be achieved. The under-coupled regime is still capable of wireless power transfer, but efficiency decreases rapidly as distance increases.

Therefore, for short distances between the Tx coil 94 and the Rx coil 96, i.e., in the over-coupled region, there can be two resonant modes at different frequencies than the resonant frequency of the individual coils. The low frequency mode corresponds to the in-phase mode and the high frequency mode corresponds to the out-of-phase mode. For both modes, the frequency at which the maximum power transfer efficiency occurs varies as the distance between the coils changes. At a sufficiently long range between the coils (the critically coupled region), maximum power transfer occurs at a single frequency: the tuned resonant frequency of the coils. Beyond this distance (the under-coupled region), the wireless power transfer efficiency drops off by one over distance cubed, and the maximum achievable efficiency occurs at this same frequency.

In one embodiment, the system detects these changes and performs auto-tuning from the TX side only. This eliminates the need for an out-of-band (OOB) radio link or backscatter techniques to transmit information from the RX side back to the TX side. A bidirectional coupler may be used to track the forward (al) and reflected (bl) signals between a power amplifier and the TX coil. By connecting the attenuated outputs from the directional coupler to an RF Gain and Phase Detector (GPD), the reflection S-parameter, S11 (S11 = b1/a1), response can be analyzed at either a single frequency or for a range of frequencies. For frequency sweeps, it may be important to ensure that the power amplifier has a sufficiently wide bandwidth so that the output power is consistent at different frequencies.

In other embodiments, signals are measured at the receiver side and sent digitally to the transmitter using either an out-of-band radio link, or an in-band communication technique (e.g., backscatter or load modulation). In other embodiments, the system detects these changes and performs auto-tuning from the receiver side only.

US 2012/153738 discloses a method and system comprising a first resonator coupled to an energy source generating a field having magnetic material, and a second resonator located a variable distance from the source resonator having magnetic material and not connected by any wire or shared magnetic material to the first resonator, where the source resonator and the second resonator are coupled to provide near-field wireless energy transfer among the source resonator and the second resonator, and where the field of at least one of the source resonator and the second resonator is shaped using magnetic materials to increase the coupling factor among the resonators.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

A wireless power transfer system in accordance with an embodiment of the present invention includes a power transmitter having a transmitter controller in signal communication with an amplifier and a transmitter-side impedance matching module, wherein the transmitter-side impedance matching module is configured to transfer power from the amplifier to a transmit resonator. A power receiver is provided having a receiver controller in signal communication with a receiver-side impedance matching module and a rectifier that outputs a rectified voltage. The receiver-side impedance matching module is configured to transfer power from a receive resonator to the rectifier. The transmitter controller is configured to receive feedback from the power receiver indicating a state of the power receiver, and to use the received feedback to adjust a parameter of the power transmitter to produce a target rectified voltage at the rectifier.

In an embodiment, the power receiver does not have a voltage regulator component.

In an embodiment, the power transmitter and power receiver include out-of-band radios in signal communication with their respective controllers, for providing the feedback from the power receiver to the power transmitter.

In an embodiment the feedback received by the transmitter includes the rectified voltage output by the receiver rectifier.

In an embodiment the power transmitter includes a sensor that detects a reflection signal in the transmitter that indicates a state of the power receiver, for example, an S-parameter such as the voltage reflection coefficient. For example, the power transmitter may include a direction coupler.

In an embodiment the receiver controller monitors a parameter of the power receiver, and modulates the receiver side impedance matching module to encode the monitored parameter, such that the transmitter controller can decode the encoded parameter to receive the desired feedback, for example, the rectified voltage.

In an embodiment the power transmitter includes a sensor to detect the presence of a body, for example, a human, and the transmitter controller is configured to stop or reduce power transmission if the sensor detects the presence of a body.

In an embodiment the transmitter controller is configured to control the transmitter-side impedance matching module to produce a target rectified voltage from the rectifier.

A method for wireless power transmission includes in a transmitter, generating an alternating current with a power amplifier and using the alternating current to energize a transmit resonator; in a receiver, receiving power from the transmit resonator with a receive resonator that is coupled to the transmit resonator and generating a rectified voltage for a load; providing feedback from the receiver to the transmitter that indicates the rectified voltage; and using the feedback to adjust the transmitter such that the rectified voltage is maintained at a predetermined value.

In an embodiment, a first impedance matching module is provided between the power amplifier and the transmit resonator, and a second impedance matching module is provided between the rectifier and the receive resonator.

In an embodiment, the transmitter further comprises a first radio, and the receiver further comprises a second radio, wherein the feedback from the receiver to the transmitter is communicated between the first and second radios.

In an embodiment, the transmitter further comprises a directional coupler, and the feedback comprises a reflection signal.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a diagram of a wireless power system 90 using magnetically coupled resonators;
FIGURE 2 is a system level diagram of a wireless power system in accordance with the present invention;
FIGURE 3 is a detailed depiction of a power transmitter module suitable for use in the system shown in FIGURE 2, that may include a directional coupler;
FIGURE 4 is a detailed schematic of a Class E power amplifier suitable for use in the system shown in FIGURE 2;
FIGURE 5 is a schematic of a power receiver module suitable for use in the system shown in FIGURE 2;
FIGURE 6 is a schematic of a variable impedance matching module suitable for use in the system shown in FIGURE 2;
FIGURE 7 is a schematic of a switch circuit suitable for use in the transmitter-side adaptive impedance matching module of the system shown in FIGURE 2;
FIGURE 8 is a schematic of a switch circuit suitable for use in the receiver-side adaptive impedance matching module of the system shown in FIGURE 2;
FIGURE 9 is a flow chart of a high-level operation of the system shown in FIGURE 2; and
FIGURE 10 is a flow chart showing a power control loop that is distributed across the transmitter and receiver, and enables elimination of a receiver-side voltage regulation component.

### DETAILED DESCRIPTION

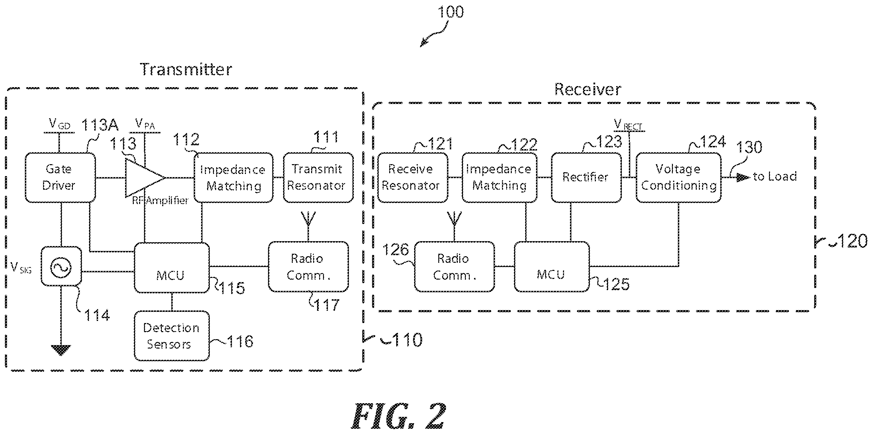

A wireless power delivery system 100 in accordance with the present invention is shown schematically in FIGURE 2. The system 100 includes a transmitter module 110 and a receiver module 120. The receiver 120 has a rectifier 123 to convert an RF wireless power signal received by a receive resonator 121 into a DC voltage. In a conventional wireless system, the rectified voltage (V_{RECT}) may vary over a wide range depending on the load power requirement and the transmit power level. If the transmitter outputs significantly more power than is required by the load device, V_{RECT} will spike, potentially dramatically. If this happens, there are two primary concerns. First, the wireless power system is operating at a very low efficiency since the transmit power level is much greater than the load or output power. Second, the high voltage level on the receiver can damage the more sensitive electronics on the receiver side and potentially destroy the receiver circuit.

To overcome the second concern, conventional wireless power systems will typically use an overvoltage protection circuit, or a zener diode to limit the maximum allowable rectified voltage. However, this does not address the problem of inefficiency. In order to operate efficiently, the rectified voltage should be held just above the required voltage for the load device or battery. However, as the distance between the coil changes, or the load power consumption changes, the rectified voltage will inherently change as well. Therefore, frequently wireless power systems also use a DC-DC converter (or other voltage regulation component) that converts the varying rectified voltage into a fixed voltage suitable for the load device, battery, battery charger (e.g., 5V, 12V, 24V, etc.), etc. However for high power applications, such as charging robots or electric vehicles on the order of 100-1000 Watts, the DC--DC converter may be one of the most expensive and thermally dangerous components on the entire receiver board.

In the wireless power system 100 shown in FIGURE 2, the transmitter 110 uses feedback from the receiver 120 to control the power that is transmitted to the receiver 120, for example, to maintain a desired V_{RECT}. Therefore, the system 100 does not require a DC-DC converter. Because the transmitter 110 is actively controlled to achieve the desired V_{RECT} at the receiver 120 the rectifier voltage may be supplied directly to the load 130, optionally with minor conditioning 124 (that does not include DC-DC conversion between the rectifier and the load 130).

Exemplary methods that may be used to provide feedback from the receiver 120 to the transmitter 110 include: (i) provide the transmitter 110 and the receiver 120 with out-of-band radio systems 117, 126, respectively, wherein the receiver 120 is configured to transmit relevant information from the receiver 120 (e.g., V_{RECT}) to the transmitter 110, for example, using WiFi, ZigBee®, or Bluetooth® protocols; (ii) provide the transmitter 110 with a detection sensor 116, for example, a directional coupler that directly detects changes in the receiver 120, e.g., through the well-known scattering parameters S, and in particular the input port voltage reflection coefficient S11; and/or (iii) modulate an impedance matching module 122 to encode a signal, e.g., a digital signal, regarding the desired receiver 120 information, without significantly interfering with the desired power transmission from the transmitter 110 to the receiver 120.

The wireless power system 100 includes the power transmitter 110 and the power receiver 120. The transmitter 110 includes a transmit resonator 111 that is coupled to a corresponding receive resonator 121 on the receiver 120 during use. A signal generator 114, and amplifier comprising a gate driver 113A and an RF amplifier 113 drive the transmit resonator 111 through a variable impedance matching module 112. One or more of the present inventors have disclosed suitable variable impedance matching modules 112 in co-pending U.S. Patent Application No. 14/402,660,

A transmitter microcontroller 115 receives feedback from the receiver 120 from one or more detection sensors 116 (e.g., a directional coupler) and/or with an out-of-band radio 117, and uses the feedback to control the transmitter 110 output. In this exemplary embodiment the microcontroller 115 may control the power output from the resonator 111 by adjusting one, or more than one, of the signal generator voltage, V_{SIG}, the gate driver voltage, V_{GD}, the power amplifier voltage, V_{PA}, and the impedance matching module 112.

The receiver 120 in this embodiment includes the receive resonator 121, that is operatively connected to a receiver-side variable impedance matching module 122 compatible with the transmitter variable impedance matching module 112. Received power is provided to a rectifier 123 to produce the desired rectified voltage. V_{RECT} may be applied directly to the load 130, or a voltage conditioning component 124 may optionally be provided. A receiver microcontroller 125 controls the variable impedance matching module 122, which may be based in part on information received from the transmitter 110 through a compatible out-of-band radio 126. The receiver 120 also transmits information back to the transmitter 110. Typically, the value of V_{RECT} is transmitted, although it is contemplated that other related data may additionally or alternatively be transmitted.

The transmit resonator 111 generates magnetic fields or electromagnetic fields from the electrical signal incoming from the variable impedance matching module 112. The variable impedance matching module 112 enables high power transfer efficiency, even as range, orientation, and/or load vary. The transmitter microcontroller 115 sets a desired state of V_{SIG}, V_{GD}, V_{PA}, and/or the impedance through the impedance matching module 112 to provide optimal power delivery. The signal generator 114 generates the power transfer signal. For example, in some embodiments the power transfer signal may be 13.56MHz, 6.78MHz, or a lower frequency signal.

The detection sensors 116 collect information that the microcontroller 115 uses to control various aspects of the power transfer system. In particular, the detection sensors 116 may include a sensor to detect reflections from the power transfer apparatus (e.g., resonator 111, impedance matching module 112, and/or RF amplifier 113). A suitable reflection signal is the voltage reflection coefficient S11 discussed above.

The detection sensors 116 may also or alternatively include sensors to detect proximity of a person. For example, pyroelectric motion sensors, passive infrared sensors, capacitive sensors, radar sensors, cameras, or other sensors may be used for detecting a person or object. It is contemplated that the detection sensors may be used to safely interrupt power transmission. For example, if a proximity sensor detects the near-field presence of a living body, or if an over-temperature condition is detected, the transmitter microcontroller 115 may stop power transmission from the transmitter 110 to the receiver 120.

Based on the data from the detection sensors 116, the microcontroller 115 adjusts one or more transmitter 110 parameters. For example, the microcontroller 115 may adjust the impedance matching module 112 or control the RF transmit power level. In another exemplary embodiment the transmitter microcontroller 115 controls the frequency, amplitude, phase, or other properties of the signal generated by signal generator 114. These signal properties may be adjusted to maximize the power transferred, or to set the power transferred to a desired level. Additionally, or alternatively, the signal properties may be adjusted to disable power transfer, for example, if no receiver is detected, or if safety sensors 116 indicate it is presently unsafe to transfer power, as discussed above.

The receive resonator 121 transduces the AC magnetic or electromagnetic power transfer fields generated by the transmit resonator 111, converting the AC magnetic fields into AC electrical signals that are fed into receiver variable impedance matching module 122. The receive microcontroller 125 generates GPIO (general purpose input/output) control signals to set the state of the variable impedance matching module 122 in order to optimize the power transfer efficiency, for example.

The receiver 120 may use the radio module 126 to transmit information about power, voltage, current, efficiency, temperature or other parameters in the receiver to the transmitter 110, where it is received by the radio module 117.

The information that the microcontroller 115 receives from the radio module 117 is used to control one or more power transmitter 110 settings. The microcontroller 115 may adjust transmit frequency or power settings to maximize power delivered to the battery and load 130, to maximize the efficiency of power transfer to the battery and load 130, and/or to maintain a power level that is requested or required by the receiver 120.

In some embodiments, the transmitter radio 117 and the receiver radio 126 are configured for bidirectional communication. The high level system control algorithm can run entirely in the transmitter microcontroller 115, and sends commands from the transmitter radio module 117 to the receiver radio module 126 that are executed by the receiver microcontroller 125. In this embodiment, the transmitter microcontroller 115 will also receive sensor data transmitted from the receiver radio module 126 to the transmitter radio module 117.

In other embodiments, only uni-directional communication is used, e.g., from the power receiver 120 to the power transmitter 110. For example, sensor data may be sent from the power receiver radio communications module 126 to the power transmitter radio communications module 117, but commands will not be sent from the power transmitter radio module 117 to the power receiver radio module 126. In still other embodiments, the radio modules 117, 126 may be eliminated entirely, for example, to reduce cost, to improve reliability, or in applications in which the radio propagation environment is unfavorable, and control of the transmitter 110 components may be based on reflected signal detection, or information transferred by modulated power signals, as discussed above.

It is contemplated that the transmit resonator 111 and the receive resonator 121 may be one-coil or two-coil resonators. The system 90 shown in FIGURE 1 uses a four-coil resonator comprising the drive loop 93, the transmit coil 94, the receive coil 96, and the load loop 97. The transmit resonator 111 may include a drive loop and a separate transmit coil, or may comprise a single coil. Similarly, the receive resonator 121 may include a receive coil and a separate load loop, or may comprise a single coil. It is also contemplated in some applications that an intermediate resonator (not shown) may be provided between the transmit resonator 111 and the receive resonator 121.

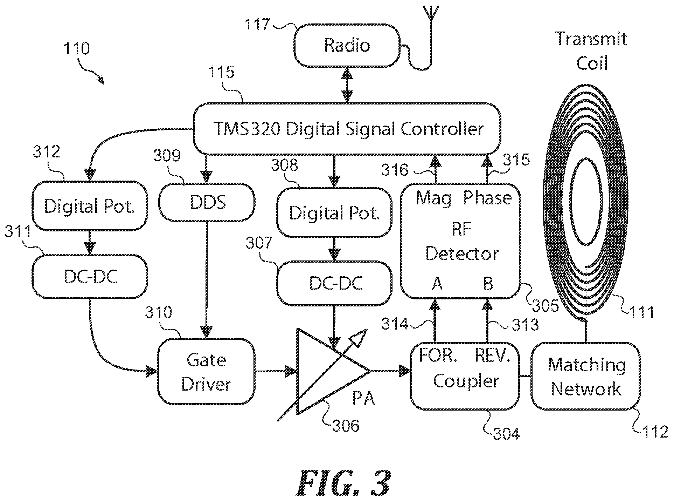

Refer now to FIGURE 3, showing details of an embodiment of the transmitter 110 having a low power radio module 117 with an optional directional coupler 304. In this embodiment, the microcontroller 115 may be, for example, a TMS320 Digital Signal Controller. The microcontroller 115 controls the operations of the power transmitter radio module 117.

The directional coupler 304 is functionally located between a power amplifier 306 and the impedance matching module 112. A relatively high power signal enters the directional coupler 304 from the power amplifier 306 and propagates through to the impedance matching module 112. The directional coupler 304 provides two low power outputs, a forward power output 314, and a sensed reflected (or reverse) power output 313.

When the system is not tuned for high efficiency, relatively large reflections will be generated, causing a relatively large signal out of the sensed reflected power output 313. The ratio of the sensed reflected power output 313 to the sensed forward power output 314 is a measure of how well the system is tuned.

The forward power output 314 and the reverse power output 313 in this exemplary embodiment are fed into an RF detector 305. The RF detector 305 has two outputs, magnitude 316 and phase 315. From forward output 314 and reverse output 313 input signals (both AC signals), the RF detector 305 produces the magnitude 316 of the ratio of the forward signal 314 to the reflected signals 313, as well as a phase difference 315 between the forward and reflected signals 314, 313. Unlike the quickly varying RF inputs, the output magnitude 316 and phase 315 are relatively slowly varying voltages. The magnitude 316 and phase 315 voltages are read by an analog to digital converter built in to the microcontroller 115. The combination of the directional coupler 304 and the RF detector 305 is one exemplary embodiment of the detection sensors 116.

The transmitter microcontroller 115 may control the output power level in one or more of several different ways. For example, the microcontroller 115 may provide digital commands to a digital potentiometer 308, causing a DC-DC converter 307 to change its output DC voltage, which is the power supply voltage for the power amplifier 306. Alternatively, the microcontroller 115 may change the signal level using another digital potentiometer 312 to control the voltage generated by a DC-DC converter 311, which is the power supply of a gate driver 310, thus changing the input voltage to the power amplifier 306. The microcontroller 115 may also, or alternatively, be configured to change the amplitude, frequency, phase or other parameters of the original input signal generated by a direct digital synthesizer (DDS) 309, and provide the changed signal to the gate driver 310.

The various methods of adjusting the power output (e.g., adjusting the power supply of the power amplifier 306, adjusting the power supply of the gate driver 310, adjusting the original input signal produced by a DDS 309) have different advantages depending upon the particular application. For example, one method may be more efficient for certain signal levels, and another may provide more or less resolution. Persons of skill in the art will appreciate the trade-offs among the various ways of controlling system output power.

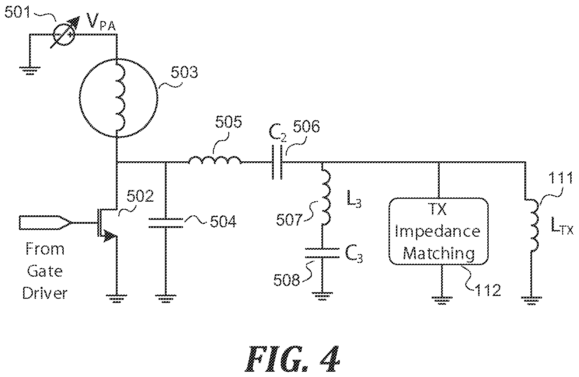

Refer now to FIGURE 4, showing a detailed schematic of a Class E power amplifier suitable for use in the power transmitter 110. This Class E amplifier circuit takes a relatively low power input square wave and generates a high power sine wave output. A variable DC power supply 501 is shown, that may optionally be implemented using the DC-DC converter 307 and digital potentiometer 308 shown in FIGURE 3. Switch 502 is a metal-oxide-semiconductor field-effect transistor (MOSFET) that accepts a control signal from a gate driver, which in one embodiment is a square wave alternating between 0V and 7V. DC current is stored in the inductor component 503. When the switch 502 is off (e.g., the input square wave is low), current flows towards the output through inductor 505. When the switch 502 is on (e.g., the input square wave is high), current flows through the switch 502 to ground. To ensure that minimal power is dissipated across the switch 502 when it is closed, inductor components 503 and capacitor 504 are sized to ensure that the voltage during this time is zero at the drain of switch 502. This network is commonly referred to as a zero-voltage switching network. The components 503, 504 also help reduce deviations from the ideal square wave, reducing ringing and other artifacts. The inductor 505 and a capacitor 506 are a resonant (tuned) circuit in series with the signal, tuned to the frequency of the input square wave. The components 505 and 506 pass the square wave's fundamental frequency, helping convert the drain waveform into a smooth sine wave desired for output. Inductor 507 and capacitor 508 form a resonant circuit in a shunt or "trap" configuration. They are tuned to twice the target frequency. Any frequency components at or above twice the fundamental frequency that pass through the inductor 505 and the capacitor 506 will be shunted to ground by components 507 and 508.

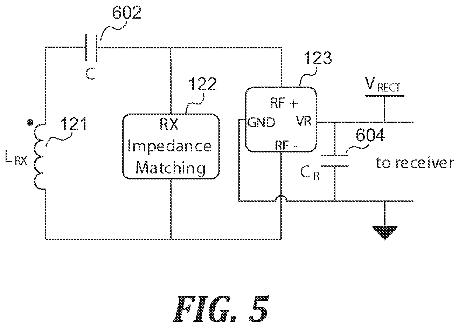

FIGURE 5 is a schematic of an exemplary power receiver 120. The rectifier 123 may be any suitable rectifier circuit as are well known in the art, including, for example, a simple diode bridge. In one embodiment the rectifier 123 comprises MOSFETs driven synchronously with the RF power signal (an alternative method of full wave rectification). In another embodiment the rectifier 123 is a single diode for half wave rectification.

The receive resonator 121 may be a single loop of wire or several turns of wire, configured to receive magnetic flux from the transmit resonator 111. A receiver capacitor component 602 is selected to tune to the transmitter's fundamental frequency for the resonator 121 and capacitor 602.

The rectifier 123, which converts the incoming AC (or RF) signal into a DC signal, with some ripples. Filtering capacitor 604 reduces the output ripple by shunting high frequency components to ground.

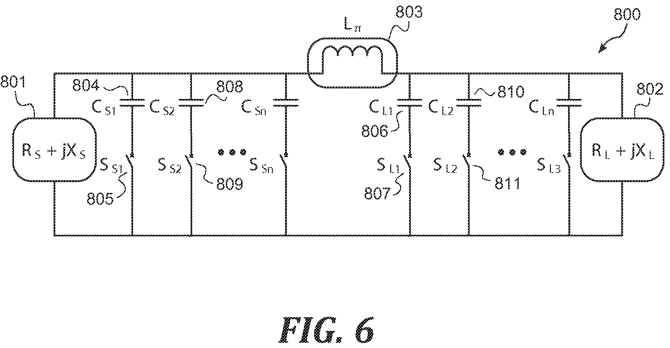

FIGURE 6 illustrates a variable impedance matching module 800 connecting a source impedance 801 with a load impedance 802. Matching the load impedance 802 with the source impedance 801 maximizes the power delivered to the load. However, other impedance settings may be selected depending on the application. The impedance matching module 800 between 801 and 802 is known as a pi-match topology. It comprises a shunt capacitor 804, 808 followed by a series inductor 803, followed by a shunt capacitor 806, 810.

The capacitances on the source side of the inductor 803 and the capacitances on the load side of the inductor 803 are broken into a plurality of sub-capacitances arranged in series.

The capacitor 804 is one of the sub-capacitances on the source side of the inductor 803. The capacitor 806 is one of the sub-capacitances on the load side of the inductor 803. Each of the sub-capacitances is in series with an electrically (or mechanically) actuated switch, such as 805, 809 on the source side or 807, 811 on the load side. When the switch 805 is closed, the corresponding capacitor 804 contributes to the capacitance on the source side of the pi-match network 800, for example. If the switch 809 is closed, then the capacitor 808 adds in parallel with the capacitor 804. By setting the switches on the source side and the load side, the capacitances on each two branch of the pi-match network 800 can be varied in accordance with the requirements of the application.

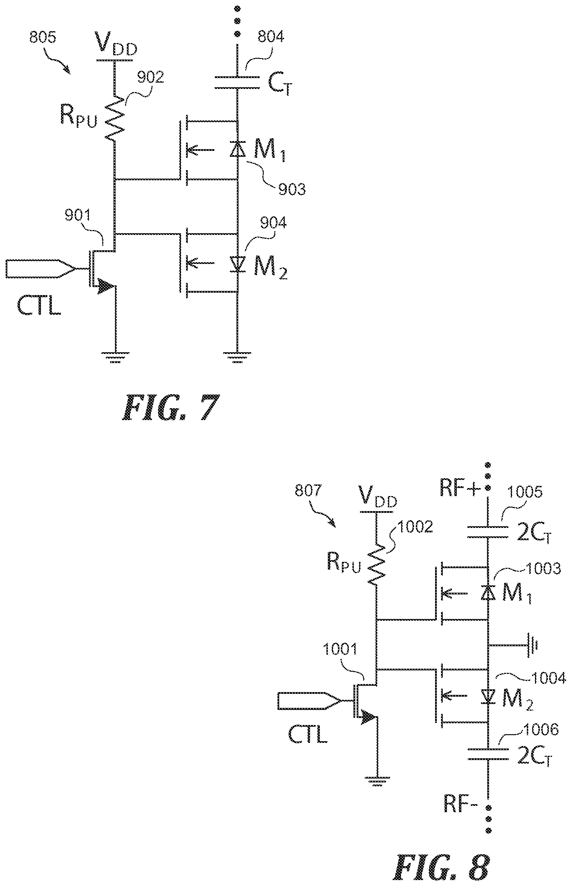

FIGURE 7 shows a switch circuit suitable for use in the transmit side adaptive impedance matching module 112. For example, the circuit could be used to implement the switch 805. This same switch design could be used for any of the transmit side switches: 805, 809, 807, or 811.

A control signal is applied to the gate of control MOSFET 901. When the switch is open, the gates of MOSFET 903 and MOSFET 904 are pulled high to V_{DD} through pull-up resistor 902. This design allows a lower voltage control signal (less than V_{DD}) to generate a higher voltage signal better suited to actuating power MOSFETs 903 and 904. When closed, MOSFETs 903 and 904 must provide a low impedance path between capacitor 804 and ground. When open, MOSFETs 903 and 904 must present a high impedance between capacitor 804 and ground. Due to their structure, power MOSFETs have a so-called intrinsic body diode. Because of the intrinsic body diode, the power MOSFET behaves not as an ideal switch, but as a switch in parallel with a diode. The orientation of the body diode is determined by the orientation of the drain and source of the MOSFET. The body diode allows conduction when the body diode is forward biased, even if the gate voltage was set in a fashion that ideally would cause the switch to be open (ideally would cause a high impedance between the source and drain). MOSFETs 903 and 904 are identical but are oriented such that their body diodes are oriented opposite one another. This way it is never the case that both body diodes are forward biased. The back-to-back MOSFET configuration allows a high impedance state to be generated that persists throughout both the positive and negative phases of the AC signal that feeds through capacitor 804.

FIGURE 8 shows a switch circuit suitable for use in the receiver-side adaptive impedance matching module 122. Because the induced AC signal on the receiver side fluctuates both positively and negatively with respect to the control signals, a different, more symmetrical design is needed on the receiver side. The MOSFET control switch 1001 and the pull-up resistor 1002 function in the same way as the MOSFET control switch 901 and the pull-up resistor 902 on the transmit side. The node between MOSFETs 1003 and 1004 is grounded. The MOSFET 1003 is connected to the capacitor 1005, which then connects to RF+ (one side of the receive coil). The MOSFET 1004 is connected to the capacitor 1006 and then to RF- (the other side of the receive coil). When the MOSFETs 1003 and 1004 are both closed, the capacitors 1005 and 1006 are effectively connected in series. If the value of the capacitor 1005 is 2C and the value of the capacitor 1006 is also 2C, then a net effective capacitance of C is produced when the MOSFETs 1003 and 1004 are both closed, because the capacitors 1005 and 1006 are connected in series. When the MOSFETs 1003 and 1004 are both commanded to be open, at least one will be in a high impedance state, because at most one of their body diodes will be forward biased simultaneously.

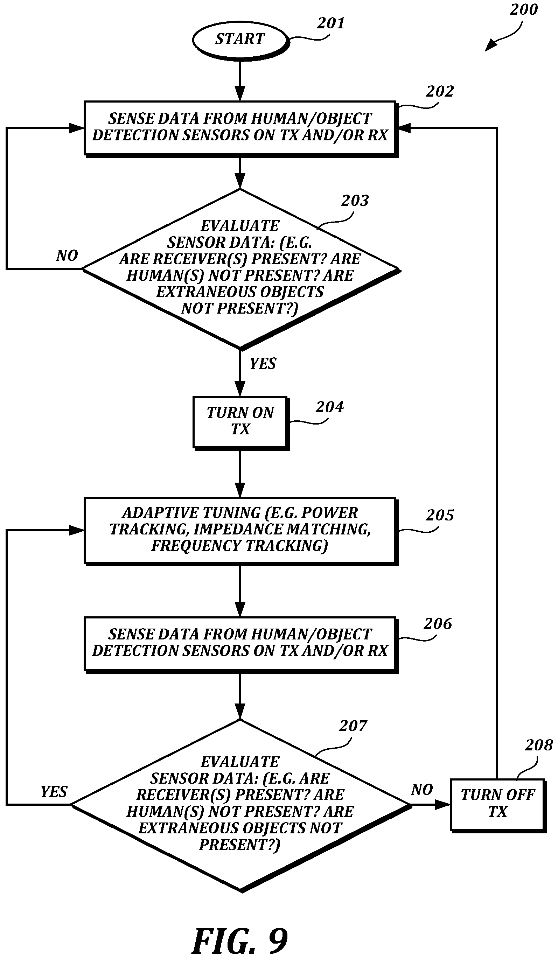

FIGURE 9 is a flow chart showing an exemplary integrate control loop 200 that would run across both the transmitter 110 and the receiver 120. In the initial Start state 201, the transmitter 110 is off. Data from sensors 116 or sensors in the receiver 120 (not shown) is collected 202, to determine if a body, for example, a person, is in close proximity to the transmitter 110. Optionally, the sensors may also, or alternatively, determine if a body is in close proximity to the receiver 120. The control loop also monitors to determine if the receiver 120 is in reasonably close proximity to the transmitter 110. If no persons are detected, and the receiver 120 is near 203 then the transmitter 110 is energized 204. The adaptive tuning 205 is initiated, for example, using power tracking, frequency tracking, or impedance matching, using feedback from the receiver 120 to control the transmitter 110, for example, to achieve a desired V_{RECT} or other receiver parameter, as discussed above. The system tuning algorithm is operable to tune the system 100 for a desired operating point. During operation as the transmitter 110 is providing power to the receiver 120, the sensors 116 continue to monitor the operating conditions and the transmitter microcontroller 115 adjusts one of, or more than one of, the power, impedance, and frequency. The system 100 monitors for the "human absent" condition and the "receiver present" condition 206, which both must be positive to continue transmitting. If a person (or animal) enters to close proximity, or if the receiver 120 (which may be, for example, disposed in a robot) is no longer within range 207, then the power transmission is turned off 208. The system may automatically resume transmission when a person is no longer detected, or when the receiver 120 and transmitter 110 are back within a desired range for power transfer.

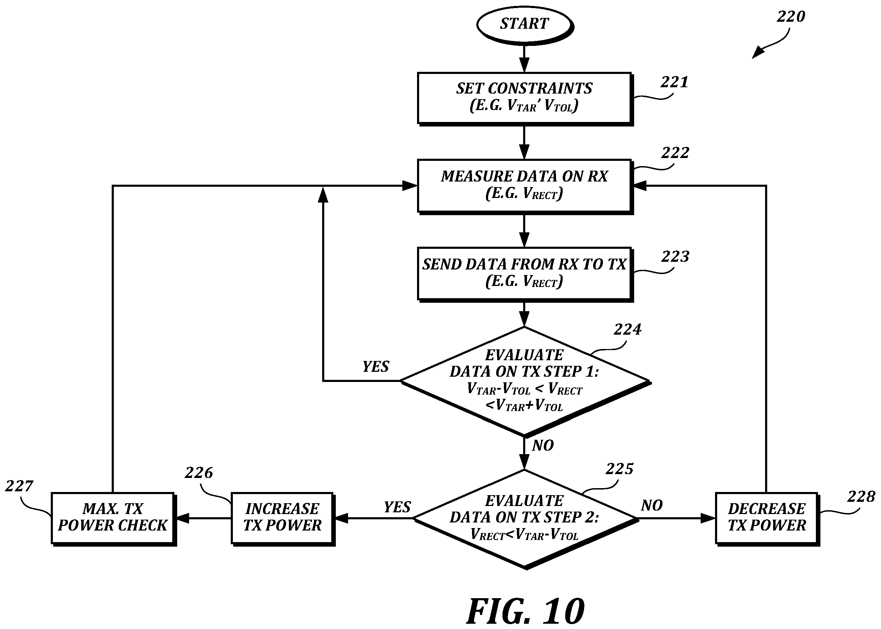

An exemplary power tracking control method 220 is illustrated in FIGURE 10, which runs across both the transmitter 110 and the receiver 120. As discussed above, the transmitter 110 adjusts one or more characteristic of the transmitted power based on a feedback signal from the receiver 120, which allows for a simpler and/or lower cost receiver, for example, by eliminating the need for a DC-to-DC converter between the rectified power output and the load. In prior art systems, a separate receiver-only power control loop is generally required.

Initially, constraint values are set 221, for example, voltage target, V_{TAR}, and voltage tolerance, V_{TOL}. The receiver 120 monitors a receiver parameter 222, typically V_{RECT}. The monitored parameter is feedback 223 from the receiver 120 to the transmitter 110. As discussed above, the feedback 223 may be accomplished in any of a variety of ways, for example, using out-of-band radios, using detected reflection parameters at the transmitter 110, or by encoding the data by modulating one of the impedance matching or the load in the power receiver, which modulation can be detected by the transmitter through the coupled resonators 111, 121. The transmitter 110 interprets the feedback signals 224. In a current embodiment, if V_{RECT} is within V_{TOL} of V_{TAR} (i.e., if V_{TAR}-V_{TOL}<V_{RECT}<V_{TAR}+V_{TOL}) then no change is required, and the receiver 222 continues to monitor the receiver parameter 222. If V_{RECT} is not within V_{TOL} of V_{TAR}, then the direction of the variance is determined 225, e.g., by testing if V_{RECT}<V_{TAR}-V_{TOL}. In this exemplary embodiment, if V_{RECT} is less than V_{TAR}-V_{TOL}, then the transmitter 110 power is increased 226 up to a maximum setting 227, otherwise (i.e., if V_{RECT} is greater than V_{TAR}+V_{TOL}), then the transmitter 110 power is decreased 227.

## Claims

1. A wireless power transfer system (100) comprising:
a power transmitter (110) comprising a transmitter controller (115) in signal communication with an amplifier (113) and a transmitter-side impedance matching module (112), wherein the transmitter-side impedance matching module (112) is configured to transfer power from the amplifier (113) to a transmit resonator (111); and
a power receiver (120) comprising a receiver controller (125) in signal communication with a receiver-side impedance matching module (122) and a rectifier (123) that outputs a rectified voltage, wherein the receiver-side impedance matching module (122) is configured to transfer power from a receive resonator (121) to the rectifier (123);
wherein the transmitter controller (115) is configured to receive feedback from the power receiver (120) indicating a state of the power receiver (120), and to use the received feedback to adjust a parameter of the power transmitter (110) to produce a target rectified voltage at the rectifier (123),
wherein the power transmitter (110) further comprises a sensor (116) that detects a reflection signal in the transmitter, wherein the reflection signal indicates the state of the power receiver (120).

2. The wireless power transfer system (100) of Claim 1, wherein the power receiver (120) does not have a voltage regulator component.

3. The wireless power transfer system (100) of Claim 1, wherein the power transmitter (110) further comprises a first radio (117) in signal communication with the transmitter controller (115) and the power receiver (120) further comprises a second radio (126) in signal communication with the receiver controller (125), wherein the feedback received by the transmitter (110) from the receiver (120) is transmitted from the second radio (126) to the first radio (117).

4. The wireless power transfer system (100) of Claim 3, wherein the feedback received by the transmitter (110) comprises the rectified voltage.

5. The wireless power transfer system (100) of Claim1, wherein the reflection signal comprises a voltage reflection coefficient, S11.

6. The wireless power transfer system (100) of Claim 5, wherein the power transmitter (110) further comprises a directional coupler (304), and the directional coupler (304) detects the voltage reflection coefficient, S11.

7. The wireless power transfer system (100) of Claim 1, wherein the receiver controller (125) is configured to monitor a parameter of the power receiver and to modulate the receiver-side impedance matching module (122) to encode the monitored parameter, and further wherein the transmitter controller (115) is configured to monitor a signal generated by the modulation of the receiver-side impedance matching module (122) and to decode the encoded parameter, wherein the encoded parameter comprises the received feedback.

8. The wireless power transfer system (100) of Claim 7, wherein the monitored parameter is the rectified voltage.

9. The wireless power transfer system (100) of Claim 1, wherein the power transmitter (110) further comprises a sensor (116) to detect a human presence, the sensor (116) being in signal communication with the transmitter controller (115), and wherein the transmitter controller (115) is configured to stop or reduce power transmission in response to a signal from the sensor (116).

10. The wireless power transfer system (100) of Claim 1, wherein the transmitter controller (115) is configured to control the transmitter-side impedance matching (112) module to produce the target rectifier voltage from the rectifier (123).

11. A method of wireless power transmission comprising:
in a transmitter (110), generating an alternating current with a power amplifier (113), and using the alternating current to energize a transmit resonator (111);
in a receiver (120), receiving power from the transmit resonator (111) with a receive resonator (121) that is coupled to the transmit resonator (111), and generating a rectified voltage for a load;
providing feedback from the receiver (120) to the transmitter (110) that indicates the rectified voltage; and
using the feedback to adjust the transmitter (110) such that the rectified voltage is maintained at a predetermined value,
wherein the transmitter (110) further comprises a directional coupler (304) that directly detects changes in the receiver (120), and the feedback comprises a reflection signal detected by said directional coupler (304).

12. The method of Claim 11, further comprising providing a first impedance matching module (112) between the power amplifier (113) and the transmit resonator (111), and a second impedance matching module (122) between the rectifier (123) and the receive resonator (121).

13. The method of Claim 11, wherein the transmitter (110) further comprises a first radio (117), and the receiver (120) further comprises a second radio (126), wherein the feedback from the receiver (120) to the transmitter (110) is communicated between the first and second radios (117, 126).

## Patentansprüche

1. Kabelloses Energieübertragungssystem (100), welches aufweist:
einen Energiesender (110), welcher eine Sendersteuerung (115) aufweist, die sich in Signalkommunikation mit einem Verstärker (113) und einem senderseitigen Leistungsanpassungsmodul (112) befindet, wobei das senderseitige Leistungsanpassungsmodul (112) konfiguriert ist, um Energie von dem Verstärker (113) zu einem Übertragungsresonator (111) zu übertragen; und
einen Energieempfänger (120), welcher eine Empfänger-Steuerung (125) aufweist, die sich in Signalkommunikation mit einem empfängerseitigen Leistungsanpassungsmodul (122) und einem Gleichrichter (123) befindet, welcher eine gleichgerichtete Spannung ausgibt, wobei das empfängerseitige Leistungsanpassungsmodul (122) konfiguriert ist, um Energie von einem Empfängerresonator (121) zu dem Gleichrichter (123) zu übertragen;
wobei die Sendersteuerung (115) konfiguriert ist, um Feedback von dem Energieempfänger (120) zu erhalten, welches einen Zustand des Energieempfängers (120) angibt, und um das erhaltene Feedback dafür zu nutzen, einen Parameter des Energiesenders (110) anzupassen, um eine gleichgerichtete Zielspannung an dem Gleichrichter (123) zu erzeugen,
wobei der Energiesender (110) außerdem einen Sensor (116) aufweist, welcher ein Reflexionssignal in dem Sender ermittelt, wobei das Reflexionssignal den Zustand des Energieempfängers (120) angibt.

2. Kabelloses Energieübertragungssystem (100) nach Anspruch 1, wobei der Energieempfänger (120) kein Spannungsregler-Bauteil aufweist.

3. Kabelloses Energieübertragungssystem (100) nach Anspruch 1, wobei der Energiesender (110) außerdem ein erstes Funkmodul (117) aufweist, welches sich in Signalkommunikation mit der Sendersteuerung (115) befindet, und der Energieempfänger (120) außerdem ein zweites Funkmodul (126) aufweist, welches sich in Signalkommunikation mit der Empfänger-Steuerung (125) befindet, wobei das durch den Sender (110) von dem Empfänger (120) empfangene Feedback von dem zweiten Funkmodul (126) zu dem ersten Funkmodul (117) übertragen wird.

4. Kabelloses Energieübertragungssystem (100) nach Anspruch 3, wobei das durch den Sender (110) empfangene Feedback die gleichgerichtete Spannung aufweist.

5. Kabelloses Energieübertragungssystem (100) nach Anspruch 1, wobei das Reflexionssignal einen Spannungsreflexionskoeffizienten S11 aufweist.

6. Kabelloses Energieübertragungssystem (100) nach Anspruch 5, wobei der Energiesender (110) außerdem einen Richtkoppler (304) aufweist, und wobei der Richtkoppler (304) den Spannungsreflexionskoeffizienten S11 ermittelt.

7. Kabelloses Energieübertragungssystem (100) nach Anspruch 1, wobei die Empfänger-Steuerung (125) konfiguriert ist, um einen Parameter des Energieempfängers zu überwachen und um das empfängerseitige Leistungsanpassungsmodul (122) zu modulieren, den überwachten Parameter zu verschlüsseln, und wobei außerdem die Sendersteuerung (115) konfiguriert ist, um ein durch die Modulation des empfängerseitigen Leistungsanpassungsmoduls (122) erzeugtes Signal zu überwachen und den verschlüsselten Parameter zu entschlüsseln, wobei der verschlüsselte Parameter das erhaltene Feedback aufweist.

8. Kabelloses Energieübertragungssystem (100) nach Anspruch 7, wobei es sich bei dem überwachten Parameter um die gleichgerichtete Spannung handelt.

9. Kabelloses Energieübertragungssystem (100) nach Anspruch 1, wobei der Energiesender (110) außerdem einen Sensor (116) zum Ermitteln einer menschlichen Anwesenheit aufweist, wobei sich der Sensor (116) in Signalkommunikation mit der Sendersteuerung (115) befindet, und wobei die Sendersteuerung (115) konfiguriert ist, um die Energieübertragung als Reaktion auf ein Signal von dem Sensor (116) einzustellen oder zu verringern.

10. Kabelloses Energieübertragungssystem (100) nach Anspruch 1, wobei die Sendersteuerung (115) konfiguriert ist, um das senderseitige Leistungsanpassungsmodul (112) zu steuern, um die Ziel-Gleichrichterspannung des Gleichrichters (123) zu erzeugen.

11. Verfahren zur kabellosen Energieübertragung, welches aufweist:
in einem Sender (110) Erzeugen eines Wechselstroms mit einem Energieverstärker (113) und Nutzen des Wechselstroms, um einen Übertragungsresonator (111) zu erregen;
in einem Empfänger (120) Empfangen von Energie von dem Übertragungsresonator (111) mit einem Empfängerresonator (121), welcher mit dem Übertragungsresonator (111) gekoppelt ist, und Erzeugen einer gleichgerichteten Spannung für einen Verbraucher;
Bereitstellen von Feedback von dem Empfänger (120) für den Sender (110), welches die gleichgerichtete Spannung angibt; und
Nutzen des Feedbacks, um den Sender (110) so anzupassen, dass die gleichgerichtete Spannung bei einem vorher bestimmten Wert gehalten wird,
wobei der Sender (110) außerdem einen Richtkoppler (304) aufweist, welcher Veränderungen im Empfänger direkt ermittelt, und wobei das Feedback ein durch den Richtkoppler (304) ermitteltes Reflexionssignal aufweist.

12. Verfahren nach Anspruch 11, außerdem aufweisend Bereitstellen eines ersten Leistungsanpassungsmoduls (112) zwischen dem Energieverstärker (113) und dem Übertragungsresonator (111), und eines zweiten Leistungsanpassungsmoduls (122) zwischen dem Gleichrichter (123) und dem Empfängerresonator (121).

13. Verfahren nach Anspruch 11, wobei der Sender (110) außerdem ein erstes Funkmodul (117) aufweist, und der Empfänger (120) außerdem ein zweites Funkmodul (126) aufweist, wobei die Rückmeldung von dem Empfänger (120) zu dem Sender (110) zwischen dem ersten und dem zweiten Funkmodul (117, 126) übertragen wird.

## Revendications

1. Système de transfert de puissance sans fil (100) comprenant :
un émetteur de puissance (110) comprenant un contrôleur d'émetteur (115) en communication de signal avec un amplificateur (113) et un module d'adaptation d'impédance côté émetteur (112), dans lequel le module d'adaptation d'impédance côté émetteur (112) est configuré de manière à transférer de la puissance, de l'amplificateur (113) vers un résonateur d'émission (111) ; et
un récepteur de puissance (120) comprenant un contrôleur de récepteur (125) en communication de signal avec un module d'adaptation d'impédance côté récepteur (122) et un redresseur (123) qui fournit en sortie une tension redressée, dans lequel le module d'adaptation d'impédance côté récepteur (122) est configuré de manière à transférer de la puissance, d'un résonateur de réception (121) vers le redresseur (123) ;
dans lequel le contrôleur d'émetteur (115) est configuré de manière à recevoir une rétroaction en provenance du récepteur de puissance (120), indiquant un état du récepteur de puissance (120), et à utiliser la rétroaction reçue en vue d'ajuster un paramètre de l'émetteur de puissance (110) afin de produire une tension redressée cible au niveau du redresseur (123) ;
dans lequel l'émetteur de puissance (110) comprend en outre un capteur (116) qui détecte un signal de réflexion dans l'émetteur, dans lequel le signal de réflexion indique l'état du récepteur de puissance (120).

2. Système de transfert de puissance sans fil (100) selon la revendication 1, dans lequel le récepteur de puissance (120) ne présente pas de composant régulateur de tension.

3. Système de transfert de puissance sans fil (100) selon la revendication 1, dans lequel l'émetteur de puissance (110) comprend en outre une première radio (117) en communication de signal avec le contrôleur d'émetteur (115), et dans lequel le récepteur de puissance (120) comprend en outre une seconde radio (126) en communication de signal avec le contrôleur de récepteur (125), dans lequel la rétroaction reçue par l'émetteur (110) en provenance du récepteur (120) est transmise de la seconde radio (126) à la première radio (117).

4. Système de transfert de puissance sans fil (100) selon la revendication 3, dans lequel la rétroaction reçue par l'émetteur (110) comprend la tension redressée.

5. Système de transfert de puissance sans fil (100) selon la revendication 1, dans lequel le signal de réflexion comprend un coefficient de réflexion de tension, S11.

6. Système de transfert de puissance sans fil (100) selon la revendication 5, dans lequel l'émetteur de puissance (110) comprend en outre un coupleur directif (304), et le coupleur directif (304) détecte le coefficient de réflexion de tension, S11.

7. Système de transfert de puissance sans fil (100) selon la revendication 1, dans lequel le contrôleur de récepteur (125) est configuré de manière à surveiller un paramètre du récepteur de puissance et à moduler le module d'adaptation d'impédance côté récepteur (122) en vue de coder le paramètre surveillé, et dans lequel en outre le contrôleur d'émetteur (115) est configuré de manière à surveiller un signal qui est généré par la modulation du module d'adaptation d'impédance côté récepteur (122) et à décoder le paramètre codé, dans lequel le paramètre codé comprend la rétroaction reçue.

8. Système de transfert de puissance sans fil (100) selon la revendication 7, dans lequel le paramètre surveillé est la tension redressée.

9. Système de transfert de puissance sans fil (100) selon la revendication 1, dans lequel l'émetteur de puissance (110) comprend en outre un capteur (116) destiné à détecter une présence humaine, le capteur (116) étant en communication de signal avec le contrôleur d'émetteur (115), et dans lequel le contrôleur d'émetteur (115) est configuré de manière à interrompre ou à réduire la transmission de puissance en réponse à un signal en provenance du capteur (116).

10. Système de transfert de puissance sans fil (100) selon la revendication 1, dans lequel le contrôleur d'émetteur (115) est configuré de manière à commander au module d'adaptation d'impédance côté émetteur (112) de produire la tension redressée cible en provenance du redresseur (123).

11. Procédé de transmission de puissance sans fil comprenant les étapes ci-dessous consistant à :
dans un émetteur (110), générer un courant alternatif avec un amplificateur de puissance (113), et utiliser le courant alternatif en vue d'exciter un résonateur d'émission (111) ;
dans un récepteur (120), recevoir une puissance en provenance du résonateur d'émission (111) avec un résonateur de réception (121) qui est couplé au résonateur d'émission (111), et générer une tension redressée pour une charge ;
fournir une rétroaction, du récepteur (120) à l'émetteur (110), laquelle indique la tension redressée ; et
utiliser la rétroaction en vue d'ajuster l'émetteur (110) de sorte que la tension redressée est maintenue à une valeur prédéterminée ;
dans lequel l'émetteur (110) comprend en outre un coupleur directif (304) qui détecte directement des changements dans le récepteur (120), et la rétroaction comprend un signal de réflexion détecté par ledit coupleur directif (304).

12. Procédé selon la revendication 11, comprenant en outre l'étape consistant à fournir un premier module d'adaptation d'impédance (112) entre l'amplificateur de puissance (113) et le résonateur d'émission (111), et un second module d'adaptation d'impédance (122) entre le redresseur (123) et le résonateur de réception (121).

13. Procédé selon la revendication 11, dans lequel l'émetteur (110) comprend en outre une première radio (117), et le récepteur (120) comprend en outre une seconde radio (126), dans lequel la rétroaction, du récepteur (120) à l'émetteur (110), est communiquée entre la première radio et la seconde radio (117, 126).
